# DEMANDE DE BREVET EUROPEEN

(11) **EP 1 894 695 A2**
(43) Date de publication de la demande: **05.03.2008**
(21) Numéro de dépôt: 07291059.9
(22) Date de dépôt: 03.09.2007
(51) Int. Cl.: B29C 45/14, B29C 51/10

(54) **Dispositif ameliore de fabrication d'une piece multicouche comprenant une couche d'aspect a surface granulee**

(30) Priorité: 04.09.2006 FR 0653566
(71) Demandeur: MÖLLERTECH SAS, 91370 Verrières le Buisson (FR)
(72) Inventeur: Tirlemont, Christophe, 36330 Le Poinconnet (FR)
(74) Mandataire: Berger, Helmut

(57) **Abrégé**

L'invention concerne un dispositif de fabrication d'une pièce multicouche comprenant une couche d'aspect à surface granulée.

Selon l'invention, les orifices d'aspiration débouchent sur une partie de la surface moulante (32) de l'empreinte (17) de forme complémentaire d'une portion accessoire (7, 8) de la couche d'aspect, telle qu'une portion périphérique de cette couche.

L'invention trouve application dans le domaine des dispositifs de fabrication de pièces multicouches grainées.

## Description

La présente invention concerne un dispositif de fabrication d'une pièce multicouche pourvue d'une couche rigide de support et d'une couche d'aspect dotée de décors en relief tels que des granules, fixée sur la couche de support, cette pièce étant destinée par exemple à servir d'habillage intérieur pour un véhicule automobile.

L'invention concerne également le procédé mis en oeuvre par ce dispositif.

Un dispositif connu de ce type comprend une partie mâle formant piston et une partie femelle constituant une empreinte pourvue d'une surface moulante définissant des granules.

Le piston d'un tel dispositif est mobile relativement à l'empreinte entre une position de fermeture dans laquelle il forme avec l'empreinte une cavité définissant la forme générale de la pièce à fabriquer, et une position d'ouverture dans laquelle il est éloigné de l'empreinte.

Lors de la mise en forme de la pièce, un revêtement thermoplastique destiné à constituer la couche d'aspect de la pièce est interposé entre l'empreinte et le piston dans la position d'ouverture du dispositif, chauffé et préformé par rapprochement de l'empreinte relativement au piston.

Il est à noter que la face du revêtement disposée en regard du piston est destinée à accueillir le matériau plastique constitutif de la couche de support, injecté au travers d'un conduit traversant le piston.

D'autre part, la face de ce revêtement située en vis-à-vis de l'empreinte est destinée à être aspirée contre la surface granulée de l'empreinte au moyen d'une multitude de conduits traversant cette empreinte et débouchant en affleurement de la surface moulante de l'empreinte.

Du fait de cette aspiration, la pièce obtenue au moyen de ce dispositif présente sur sa couche d'aspect des marques circulaires dues aux orifices d'entrée d'air des canules d'aspiration, constituant des défauts d'aspect ou imperfections, d'autant plus visibles que les décors de la couche d'aspect sont fins ou peu profonds.

L'invention vise à palier ce problème.

A cet effet, l'invention concerne un dispositif de fabrication d'une pièce multicouche comprenant une couche d'aspect à surface à reliefs, tels que des grains, formée par un film constitué en un matériau malléable à chaud et rigide à froid, comprenant un piston, une empreinte formant avec le piston dans une position de fermeture une cavité de forme complémentaire de la pièce à fabriquer, l'empreinte définissant une surface moulante de forme complémentaire de la face avant de la couche d'aspect, contre laquelle le film est destiné à être mis en forme à chaud puis refroidi, des moyens d'étanchéité assurant le plaquage du film contre la surface moulante de l'empreinte de façon étanche et des orifices d'aspiration du film contre l'empreinte situés sur la surface moulante de cette empreinte.

Selon l'invention, les orifices d'aspiration débouchent sur une partie de la surface moulante de l'empreinte de forme complémentaire d'une portion secondaire de la couche d'aspect, telle qu'une portion périphérique de cette couche.

Selon une autre caractéristique de l'invention, la portion secondaire de la couche d'aspect est une portion périphérique et/ou une portion destinée à être supprimée de la pièce à fabriquer.

Selon une autre caractéristique de l'invention, les orifices d'aspiration communiquent avec des conduits d'aspiration qui comprennent des tubes définissant une cavité interne d'aspiration.

Selon encore une autre caractéristique de l'invention, les conduits d'aspiration comprennent des tiges de diamètre inférieur aux tubes et introduites chacune dans la cavité d'un tube, de façon à définir en section transversale une couronne d'aspiration.

Selon encore une autre caractéristique de l'invention, l'empreinte comprend un pavé rapporté dont une surface extérieure coincide avec la surface moulante de l'empreinte et définissant avec l'empreinte un jeu périphérique constituant l'orifice d'aspiration, les conduits d'aspiration débouchant au sein d'une galerie ménagée sous le pavé et étant en communication avec l'orifice d'aspiration du film.

Selon encore une autre caractéristique de l'invention, les moyens d'étanchéité comprennent un cadre d'étanchéité encadrant le film et des moyens de pression assurant le plaquage du cadre contre la périphérie de la surface moulante de l'empreinte de façon étanche.

Selon encore une autre caractéristique de l'invention, le piston comprend des canaux de soufflage débouchant à la surface de ce piston en vis-à-vis de l'empreinte et destinés à insuffler de l'air contre la face arrière du film en vue de son refroidissement.

Selon encore une autre caractéristique de l'invention, la pièce à fabriquer comprend une couche rigide de support formée par un matériau plastique apte à être mis en forme par moulage par injection, le piston comprenant un conduit d'injection du matériau plastique débouchant sur la surface d'injection du piston située en vis-à-vis de l'empreinte.

L'invention concerne également le procédé mis en oeuvre par le dispositif ci-dessus qui comprend une étape de positionnement du film à chaud contre la surface moulante de l'empreinte de façon étanche et une étape d'aspiration (e) de l'air compris entre le film et la surface moulante de l'empreinte par des orifices d'aspiration localisés au niveau de la partie de la surface moulante de l'empreinte de forme complémentaire de la portion secondaire de la couche d'aspect.

Selon encore une autre caractéristique de l'invention, le procédé comprend une étape d'injection (i) d'un matériau plastique constitutif du support contre la face du film opposée à l'empreinte, cette étape d'injection (i) étant simultanée à l'étape d'aspiration par les conduits.

L'invention sera mieux comprise et d'autres buts, avantages et caractéristiques de celle-ci apparaîtront à la lecture de la description suivante, faite en référence aux figures annexées parmi lesquelles :
- la figure 1 est une vue schématique en coupe du dispositif selon l'invention, durant une première étape du procédé de l'invention ;
- la figure 2 est une vue analogue à celle de la figure 1, au cours d'une deuxième étape du procédé de l'invention ;
- la figure 3 est une vue similaire à celle de la figure 1, pendant une troisième étape du procédé de l'invention ;
- la figure 4 est une vue schématique en coupe de l'empreinte du dispositif de l'invention selon un autre mode de réalisation ;
- la figure 5 est une vue de haut du dispositif de la figure 4 au niveau de la flèche repérée par V sur cette figure 4 ;
- la figure 6 est une vue de haut du dispositif de la figure 4 au niveau de la flèche repérée par VI sur cette figure 4;
- la figure 7 est une vue en coupe transversale du dispositif de la figure 6 selon la ligne repérée par VII-VII sur cette figure 6;
- la figure 8 est une vue en coupe transversale du dispositif de la figure 6 le long de la ligne repérée par VIII-VIII sur cette figure 6 ;
- la figure 9 est une vue en coupe transversale du dispositif de la figure 2;
- la figure 10 est une vue de haut du dispositif de la figure 9 au niveau de la flèche repérée par X sur cette figure 9;
- la figure 11 est une vue agrandie de la zone repérée par XI sur la figure 9 ;
- la figure 12 est une vue agrandie de la zone repérée par XII sur la figure 9.

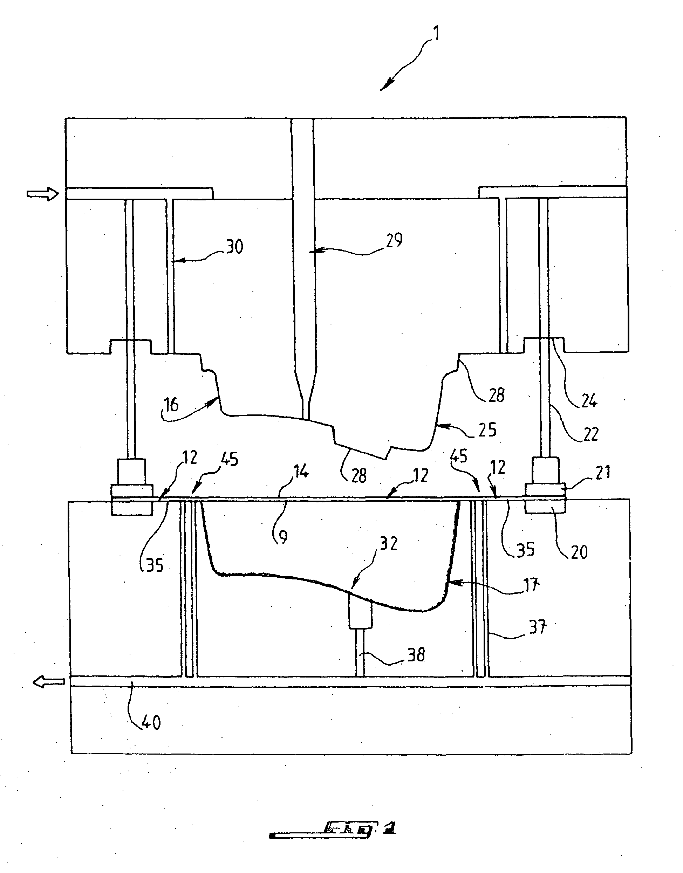

Sur la figure 1 est représenté un dispositif de fabrication 1 d'une pièce multicouche 2 notamment destinée à servir d'habillage intérieur pour un véhicule automobile.

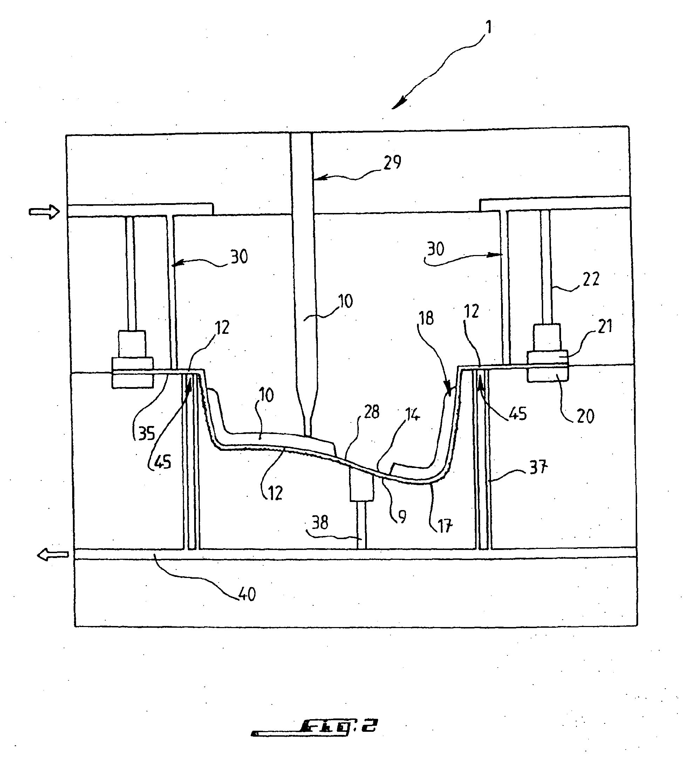

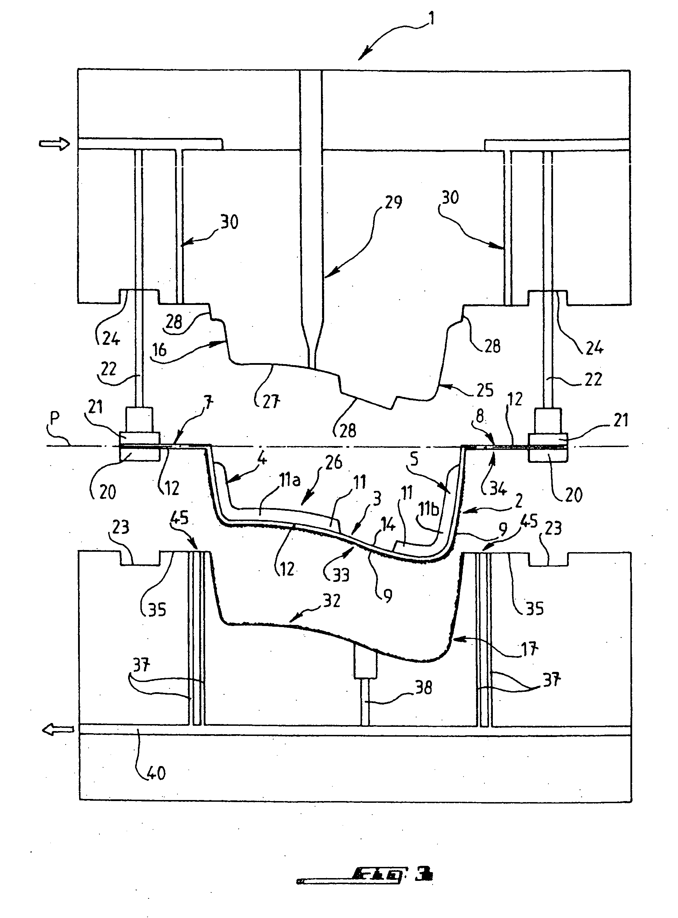

Cette pièce 2, mieux visible sur la figure 3, présente une forme générale bombée définissant une paroi centrale principale 3, deux parois latérales opposées 4, 5 s'étendant de part et d'autre de la paroi centrale 3 et divergeant l'une par rapport à l'autre, ces trois parois 3, 4, 5 définissant ensemble une section transversale en forme générale de U, et deux parois périphériques 7, 8 s'étendant chacune d'un côté d'une paroi latérale 4, 5 et définissant un plan de fixation P.

Les parois périphériques 7, 8 de la pièce d'habillage sont destinées par exemple à la fixation de cette pièce à une partie de carrosserie du véhicule et à être recouverte dans ce cas par des pièces environnantes de ce véhicule. Selon une autre possibilité, les parois périphériques 7, 8 sont détachées de la pièce 2 ou reprises en découpe en vue de l'utilisation de la pièce au sein du véhicule et forment des déchets techniques. Dans les deux cas, lorsque la pièce est utilisée au sein du véhicule, les parois périphériques 7, 8 sont non apparentes ou encore reprises en découpe et constituent pour cette raison des portions dites accessoires ou secondaires de la pièce 2.

Au contraire, les parois latérales 4, 5 et centrale 3 de la pièce 2 sont destinées à être visibles par les occupants du véhicule et présentent dans l'exemple illustré aux figures une face revêtue de grains 9.

En outre, cette pièce 2 est constituée par l'assemblage d'une couche rigide inférieure de support 11 constituée en un matériau plastique 10 apte à être mis en forme par moulage par injection, conférant à la pièce, une fois refroidie, la forme et la rigidité, et d'une couche supérieure d'aspect 12 constituée par un film formant revêtement portant la face revêtue de grains et étant formée par un matériau thermoplastique pouvant être chauffé, mis en forme et conserver lorsque refroidit dans son état mis en forme, la forme qu'il avait à chaud.

Ce revêtement ou film peut par exemple se présenter sous la forme de feuilles de composition polypropylène modifié, polychlorure de vinyle, polyuréthane.

Avantageusement, une couche de mousse de type polyoléfine ou polyuréthane (non représentée) constitue la face arrière du film 12 et se retrouve être interposée entre ce film 12 et le support 11 au sein de la pièce 2.

D'autre part, la couche de support 11 se présente sous la forme de deux portions distinctes 11a, 11b fixées sur la face arrière 14 du film 12 respectivement le long de la paroi latérale 4 et d'une partie de la paroi centrale 3 et le long de la paroi latérale 5 et d'une autre partie de la paroi centrale 3.

Comme mieux visible sur la figure 3, la couche d'aspect 12 constitue à elle seule les parois périphériques 7, 8 de la pièce 2 et forme avec la couche de support 11 les parois latérales 4, 5 et centrale 3 de la pièce 2.

Afin de fabriquer cette pièce 2, le dispositif selon l'invention 1 comprend un moule pourvu d'une partie mâle formant piston 16 et d'une partie femelle formant empreinte 17, montées toutes deux sur une presse horizontale et/ou verticale d'injection.

Le piston 16 est mobile en translation relativement à l'empreinte 17 entre une position de fermeture du moule représentée sur la figure 2 dans laquelle l'empreinte 17 définit avec le piston 16 une cavité 18 de forme générale complémentaire de la pièce à fabriquer et les positions d'ouverture du moule des figures 1 et 3 permettant respectivement la mise en place du film 12 et le retrait de la pièce une fois mise en forme, ainsi qu'un cadre 20 et un contre cadre 21 interposés entre l'empreinte 17 et le piston 16 et maintenant le film 12 entre ces deux éléments.

Le cadre 20 et le contre cadre 21 présentent des formes générales complémentaires du contour du film 12 et sont positionnés le long des parois périphériques 7, 8 du film 12 respectivement le long de la face avant 9 et de la face arrière 14 de ce film 12, de façon à enserrer les bords du film 12.

Ces cadres 20, 21 sont montés mobiles par rapport au piston 16, par exemple au moyen d'un vérin 22 de façon à régler la distance du film 12 relativement à l'empreinte 17 et au piston 16, entre une position plaquée contre l'empreinte 17, dans laquelle le film 12, l'empreinte 17 et les cadres 20, 21 forment un ensemble étanche, et une position d'éloignement par rapport à l'empreinte 17.

Avantageusement, ce même vérin 22 constitue un moyen pour assurer le maintien du cadre dans sa position plaquée contre l'empreinte. Selon un autre mode de réalisation non représenté, ces moyens peuvent être constitués par des organes élastiques tels que des ressorts de compression.

Des logements de réception 23 du cadre 20, de forme complémentaire de ce dernier sont réalisées dans la masse de l'empreinte 17 et des logements secondaires de réception 24 du contre cadre 21 de forme complémentaire de celui-ci, sont formés au sein du piston 16.

Ce piston 16 comprend une partie proéminente 25 de forme complémentaire de la surface intérieure 26 de la pièce à fabriquer 2, définissant une surface d'injection 27, et des masques 28 faisant saillie extérieurement de la surface d'injection 27 du piston 16 et étant d'une hauteur leur permettant de venir en contact avec la face arrière 14 du film dans la position de fermeture de l'empreinte 17 afin de former les zones de la pièce 2 dépourvues de couche de support 11.

L'injection de matériau plastique 10 jusqu'à la surface d'injection 27 du piston 16 est assurée par un conduit d'injection 29 traversant le piston 16 et débouchant sur sa surface d'injection. La pression du matériau plastique injecté à l'état liquide est par exemple comprise entre 50 et 250 bar.

En outre, des canaux de soufflage 30 traversant également le piston 16 sont prévus pour véhiculer un gaz tel que de l'air comprimé sur la face arrière 14 du film 12 ou sur la couche de mousse lorsque le film 12 en est pourvu, au niveau de ses parois périphériques 7, 8 afin de refroidir cette partie de film 12 préalablement à la phase d'injection du matériau constitutif du support 11, permettant ainsi d'éviter une dégradation du film 12 ou de la mousse du fait de la température du matériau injecté.

D'autre part, l'empreinte 17 définit une surface moulante à reliefs ou grainée 32 de forme complémentaire de la face revêtue de grains ou surface extérieure apparente 33 de la pièce à fabriquer visible sur la figure 3, à savoir complémentaire des parois latérales 4, 5 et centrale 3 de cette pièce. Cette surface 32 est qualifiée de grainée car elle est parsemée d'une multitude de grains obtenus par des techniques connues en soi telles que des techniques de traitement de surface chimiques, au laser ou par moletage, permettant de donner à la face avant 9 du film chauffé puis refroidit 12 un aspect grainé ou granulé.

L'empreinte 17 définit également une surface moulante non grainée 35 sensiblement plane et de forme complémentaire de la surface extérieure non apparente 34 de la pièce à fabriquer 2, c'est-à-dire complémentaire des parois périphériques 7, 8 de cette pièce 2.

Cette empreinte 17 est pourvue de conduits d'aspiration d'air traversant l'empreinte 17 et assurant le vide entre la face avant 9 du film chauffé 12 et l'empreinte 17, lorsque les cadres 20, 21 occupent leur position plaquée contre l'empreinte 17, pour que cette face 9 épouse les reliefs en grains de la surface moulante grainée 32 de l'empreinte 17.

Selon l'invention, les conduits 37 sont disposées au sein de l'empreinte 17 de façon à aspirer les parties accessoires de la pièce 2, c'est-à-dire pour l'exemple des figures, les parties du film 12 destinées à former les parois périphériques 7, 8 de la pièce. A cet effet, ces conduits 37 sont en communication avec un orifice d'aspiration du film 12 contre l'empreinte 17 situé sur une partie 45 de la surface moulante 32 de l'empreinte complémentaire d'une portion accessoire de la pièce, c'est-à-dire pour l'exemple des figures, la surface moulante non grainée 35 de l'empreinte 17.

Ces conduits 37 aspirent l'air avec une dépression suffisamment importante pour que les parties de film 12 destinées à avoir un aspect granulé soient plaquées contre la surface moulante 32 de l'empreinte et suffisamment faible pour éviter la formation de grains profonds. Par exemple, cette dépression peut atteindre les 800 mbar.

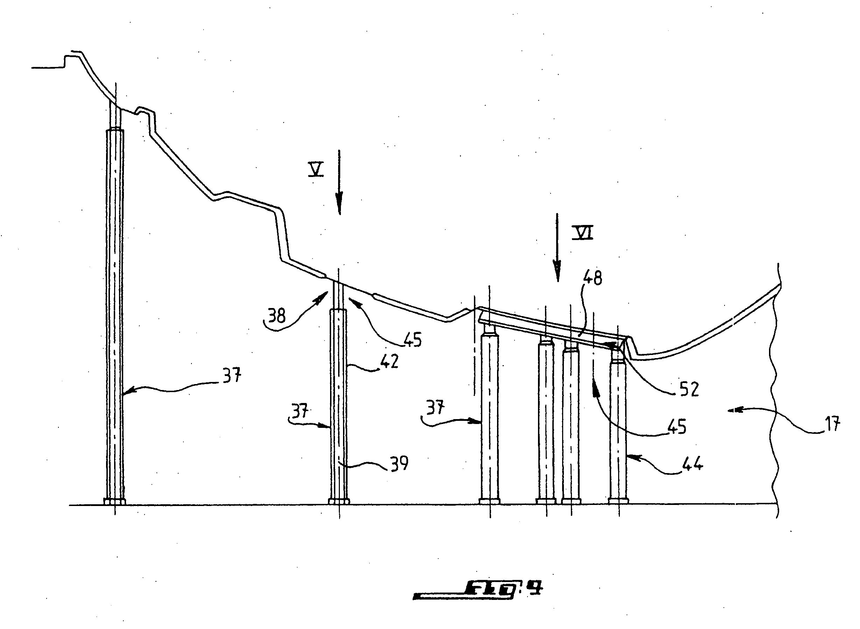

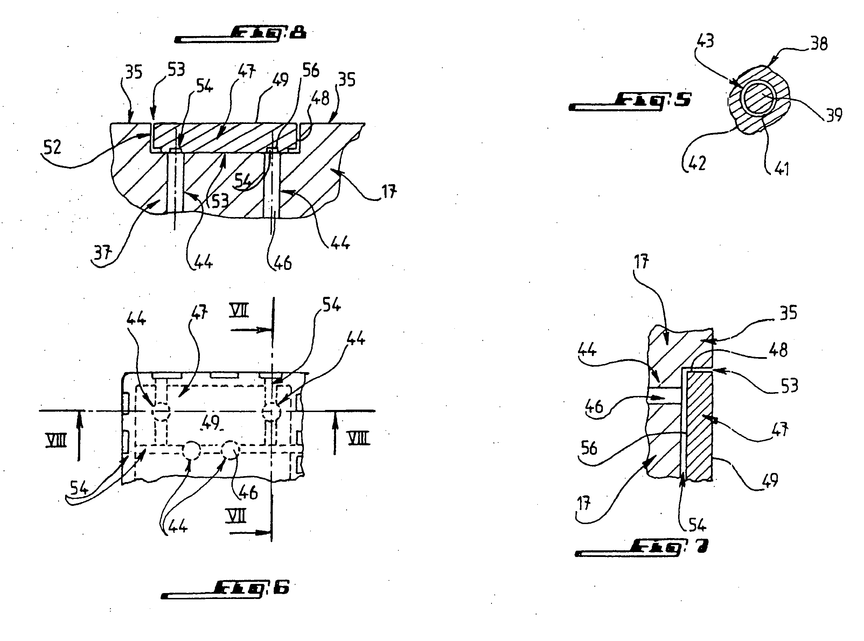

Selon un premier mode de réalisation d'un conduit d'aspiration de ce type mis en évidence sur la figure 5, ce conduit 37 forme une canule ou broche 38 constituée par l'assemblage d'une tige 39 au sein d'une cavité interne 41 d'un tube 42 de diamètre supérieur intégré à l'empreinte 17, définissant une couronne d'aspiration 43.

Comme visible sur la figure 12, la largeur de la couronne formée en section transversale par la broche peut diminuer en direction de l'orifice d'entrée d'air de façon à former un étranglement ou venturi pouvant accélérer localement l'aspiration d'air.

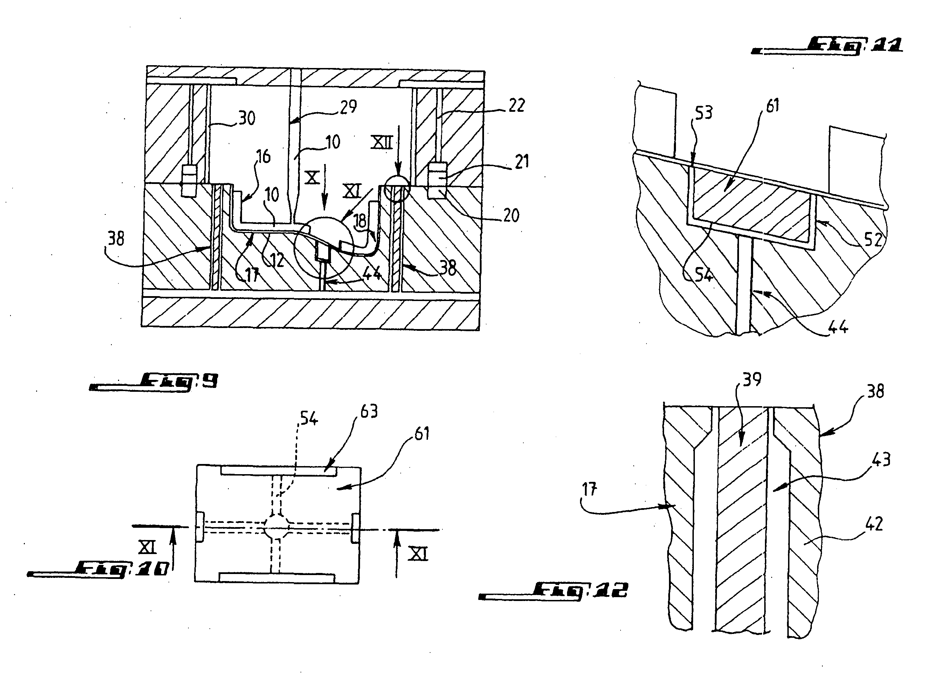

Selon l'autre mode de réalisation de ces conduits illustré sur la figure 6, ils sont constitués par des tubes 44 définissant une cavité interne 46 sensiblement circulaire. Ces tubes 44 sont conçus pour déboucher sur la surface moulante non grainée 35 de l'empreinte 17 comme illustré sur la figure 9 ou pour servir à aspirer l'air autour d'un pavé rapporté à la surface moulante 32, 35 de l'empreinte 17, comme représenté sur les figures 8 et 11.

En effet, dans une variante de réalisation de l'empreinte 17, cette empreinte 17 comprend le pavé rapporté 47 se présentant sous la forme d'une plaque rectangulaire définissant des bords libres frontaux 48, une surface externe 49 présentant ou non, selon l'aspect de la pièce à fabriquer, des reliefs comme mieux visible sur les figures 6 à 8.

Ce pavé 47 est destiné à être inséré dans un évidement d'accueil 52 de forme complémentaire réalisé à partir de la surface moulante 32, 35 de l'empreinte 17 de sorte que la surface externe 49 du pavé 47 constitue la partie de la surface moulante 32, 35 de l'empreinte 17 qui est ôtée au niveau de l'évidement 52, le pavé 47 reposant sur l'empreinte 17 par des parties formant base 53.

Les dimensions du pavé 47 et de l'évidement 52 le recevant sont telles qu'il existe un jeu périphérique latéral 53 entre le pavé 47 et l'empreinte 17 définissant l'orifice d'aspiration d'air.

Selon cette variante, le pavé 47 est pourvu de sillons 54 formés sur la face inférieure du pavé 47 située en regard de l'empreinte et définissant au sein du pavé 47 des parties situées à distance 56 de l'empreinte 17 lorsque le pavé 47 repose sur cette empreinte 17 et les parties formant base 53. Ces sillons communiquent avantageusement les uns avec les autres et débouchent sur les bords périphériques ou frontaux 48 du pavé 47 comme le met en évidence la figure 7, et ainsi sur le jeu périphérique d'aspiration 53.

Par ailleurs, selon cette même variante de réalisation, les conduits d'aspiration 37 débouchent de l'empreinte 17 sous le pavé 47 au niveau des sillons 54 ménagés dans ce pavé 47. De la sorte, les tubes 44 permettent d'aspirer depuis leur extrémité supérieure l'air compris entre les sillons 54 et l'empreinte 17 et l'air compris entre les bords frontaux 48 du pavé 47 et la face correspondante de l'évidement d'accueil 52 de ce pavé 47.

Selon encore une autre variante de l'aspiration du film 12 contre l'empreinte illustré sur les figures 10 et 11, toujours située au niveau d'une partie de l'empreinte complémentaire d'une portion accessoire de la pièce, l'aspiration est assurée au moyen d'un pavé de plus grande hauteur et nommé ci-après insert 61, coopérant avec un tube 44 du type précité.

Comme pour le cas du pavé 47, cet insert 61 est logé dans un évidement 52 réalisé dans l'empreinte 17 et est espacé latéralement de cet évidement 52 par un jeu périphérique 53. Il contient également des sillons 54 formés sur sa face en regard de l'empreinte 17, qui convergent en son centre. L'extrémité du tube 44 débouche de l'empreinte 17 sous l'insert 61 au niveau de l'intersection des sillons 54 et permet d'aspirer l'air compris entre les sillons 54 et l'empreinte 17 et entre les bords frontaux 48 de l'insert 61 et le logement 52 de ce dernier en vue de l'aspiration du film sur jacent 12 contre la face externe de l'insert 61 et la surface moulante non grainée 35 de l'empreinte 17.

Il est à noter que des découpes 63 peuvent être réalisées sur le contour du pavé 47 et/ou de l'insert 61 pour augmenter la surface d'aspiration du film 12 par les tubes 44 ou canules 38 sous jacentes.

Dans le cas des broches 38 susmentionné comme dans le cas des tubes 44, associés ou non au pavé 47, les orifices d'aspiration d'air 40 en communication avec ces conduits 37 débouchent sur la surface moulante non grainée 35 de l'empreinte 17 de forme complémentaire des parois périphériques du film 12, non visibles lors de l'utilisation de la pièce ou destinées à être reprise en découpe.

Les conduits d'aspiration 37 sont avantageusement reliées à un même réseau d'aspiration 40 constitué par des canaux percés au sein de l'empreinte 17. Selon une variante possible, les conduits peuvent être reliés à des réseaux d'aspiration différents afin de piloter l'aspiration de façon indépendante en temps et en intensité.

Par ailleurs, ces conduits 37 peuvent également être utilisés une fois la pièce formée pour insuffler de l'air pressurisé sur la face avant de cette pièce 2, afin de faciliter le retrait de cette pièce 2.

On décrit dans ce qui suit le procédé mis en oeuvre par le dispositif selon l'invention qui comprend:
- une étape de mise en place (a) du film 12 destiné à former la portion visible granulée de la pièce à fabriquer 2 et la portion périphérique non visible de cette pièce, entre les cadres 20, 21, à l'état brut c'est-à-dire à plat, ce film 12 étant éventuellement pourvu d'une couche de mousse constituant une face arrière pour ce film,
- une étape de ramollissement (b) de ce film 12 par chauffage à une température dépendant de la température de transition vitreuse de ce film 12, cette température de ramollissement pouvant être comprise entre 120 et 200°C,
- une étape de positionnement (c) de l'ensemble formé par les cadres 20, 21 et le film contre l'empreinte 17 de façon étanche, au moyen des vérins de déplacement 22 des cadres 20, 21, cette étape pouvant avoir lieu préalablement à l'étape (b) ci-dessus,
- une étape de pré fermeture du moule (d) au cours de laquelle le piston 16 et l'empreinte 17 sont rapprochés l'un de l'autre, la partie proéminente 25 du piston 16 emboutissant le film, de sorte qu'il existe un jeu mécanique entre le film 12 et l'empreinte 17 compris entre 0.1 et 1 mm, les cadres 20, 21 étant également déplacés à leur position plaquée contre l'empreinte 17, formant avec le film 12 et l'empreinte 17 un ensemble étanche,
- une étape d'aspiration en périphérie du film ramolli 12 (e) par les conduits d'aspiration 37 au cours de laquelle ces conduits 37 font le vide entre la face avant 9 du film 12 et la surface moulante 32 de l'empreinte, l'orifice d'aspiration de ces conduits 37 étant localisé au niveau de portions accessoires du film ramolli 12 c'est-à-dire les parois périphériques. Au cours de cette étape, le film épouse les reliefs de l'empreinte et est maintenu contre ces reliefs par l'aspiration des conduits,
- une étape de refroidissement (g) du film 12 par insufflation d'air sur la face arrière 14 du film 12 (ou sur la couche de mousse le cas échéant) pouvant être simultanée aux étapes (e) et (f),
- une étape de fermeture complète du moule (h) par laquelle l'empreinte 17, le film 12 et le piston 16 définissent les cavités devant être comblées par le matériau plastique liquide constitutif du support 11,
- une étape d'injection (i) du matériau plastique constitutif du support 11 au moyen du conduit d'injection 28, la pression d'injection de ce matériau participant encore à la formation des grains,
- une étape de refroidissement (j) de l'ensemble formé par le film 12 et le matériau du support 11, par laquelle on obtient la pièce définitive,
- une étape d'ouverture du moule et d'extraction (k) de la pièce 2.

Le dispositif et le procédé décrits ci-dessus offrent différents avantages, parmi lesquels :
Les orifices d'entrée d'air des canules d'aspiration ne laissent aucune marque sur les portions apparentes de la pièce, contrairement aux dispositifs connus.
La possibilité de réaliser des grains fins et peu profonds sur la pièce à fabriquer, du fait de l'absence de marquage des orifices des conduits sur les portions visibles de la pièce.
Tout glissement du film lors de l'injection du thermoplastique est évité du fait de l'aspiration par les canules durant l'injection du thermoplastique, et de la pression exercée par les cadres
L'utilisation d'un unique outillage pour la réalisation de la pièce.

Il est à noter que l'étape de pré fermeture du moule préalable à l'étape d'aspiration assure l'existence d'un jeu mécanique entre le film 12 et l'empreinte 17, de sorte que l'air est aspiré sur tout l'espace de jeu compris entre le film 12 et l'empreinte 17 par des orifices d'aspiration 40 disposés à la périphérie, c'est-à-dire dans une zone secondaire ou accessoire non grainée, à l'extérieur de la partie du moule 32 pourvue de reliefs c'est-à-dire grainée. Ceci permet d'éviter tout orifice d'aspiration dans la partie en creux 32 qui peut donc être grainée sur toute sa surface.

## Revendications

1. Dispositif de fabrication d'une pièce multicouche comprenant une couche d'aspect à surface à reliefs, tels que des grains, formée par un film (12) constitué en un matériau malléable à chaud et rigide à froid, comprenant un piston (16), une empreinte (17) formant avec le piston (16) dans une position de fermeture une cavité (18) de forme complémentaire de la pièce à fabriquer (2), l'empreinte (17) définissant une surface moulante (32, 35) de forme complémentaire de la face avant (9) de la couche d'aspect, contre laquelle le film (12) est destiné à être mis en forme à chaud puis refroidi, des moyens d'étanchéité (22, 20, 21) assurant le plaquage du film (12) contre la surface moulante (32, 35) de l'empreinte (17) de façon étanche et des orifices d'aspiration (40) du film (12) contre l'empreinte (17) situés sur la surface (45) moulante (32, 35) de cette empreinte (17), **caractérisé en ce que** les orifices d'aspiration (40) débouchent sur une partie (45) de la surface moulante (32, 35) de l'empreinte (17) de forme complémentaire d'une portion secondaire (7, 8) de la couche d'aspect, telle qu'une portion périphérique de cette couche.

2. Dispositif selon la revendication 1, **caractérisé en ce que** la portion secondaire (7, 8) de la couche d'aspect est une portion périphérique et/ou une portion destinée à être supprimée de la pièce à fabriquer.

3. Dispositif selon la revendication 1 ou 2, **caractérisé en ce que** les orifices d'aspiration (40) communiquent avec des conduits d'aspiration (37) traversant l'empreinte et qui comprennent des tubes (44) définissant une cavité interne d'aspiration (46).

4. Dispositif selon la revendication 3, **caractérisé en ce que** les conduits d'aspiration (37) comprennent des tiges (39) de diamètre inférieur aux tubes (44) et introduites chacune dans la cavité (46) d'un tube (44), de façon à définir en section transversale une couronne d'aspiration (43).

5. Dispositif selon l'une des revendications précédentes, **caractérisé en ce que** l'empreinte (17) comprend un pavé rapporté (47) dont une surface extérieure (49) coincide avec la surface moulante (32, 35) de l'empreinte (17), et définissant avec l'empreinte (17) un jeu périphérique constituant l'orifice d'aspiration (40), les conduits d'aspiration (37) débouchant au sein d'une galerie ménagée sous le pavé et étant en communication avec l'orifice d'aspiration du film (12).

6. Dispositif selon l'une des revendications précédentes, **caractérisé en ce que** les moyens d'étanchéité comprennent un cadre d'étanchéité (20, 21) encadrant le film (12) et des moyens de pression (22) assurant le plaquage du cadre (20, 21) contre la périphérie de la surface moulante (32, 35) de l'empreinte de façon étanche.

7. Dispositif selon l'une des revendications précédentes, **caractérisé en ce que** le piston (16) comprend des canaux de soufflage (30) débouchant à la surface de ce piston (16) en vis-à-vis de l'empreinte (17) et destinés à insuffler de l'air contre la face arrière du film (12) en vue de son refroidissement.

8. Dispositif selon l'une des revendications précédentes, **caractérisé en ce que** la pièce à fabriquer (2) comprend une couche rigide de support (11) formée par un matériau plastique (10) apte à être mis en forme par moulage par injection, et **en ce que** le piston (16) comprend un conduit d'injection (29) du matériau plastique (10) débouchant sur la surface d'injection du piston (16) située en vis-à-vis de l'empreinte (17).

9. Procédé mis en oeuvre par le dispositif de l'une quelconque des revendications précédentes, **caractérisé en ce qu'**il comprend une étape de positionnement (c) du film à chaud (12) contre la surface moulante (32, 35) de l'empreinte (17) de façon étanche et une étape d'aspiration (e) de l'air compris entre le film (12) et la surface moulante (32, 35) de l'empreinte (17) par des orifices d'aspiration localisés au niveau de la partie de la surface moulante (32, 35) de l'empreinte (17) de forme complémentaire de la portion secondaire (7, 8) de la couche d'aspect.

10. Procédé selon la revendication 9, **caractérisé en ce qu'**il comprend une étape d'injection (i) d'un matériau plastique (10) constitutif du support (11) contre la face (14) du film (12) opposée à l'empreinte (17), cette étape d'injection (i) étant simultanée à l'étape d'aspiration par les conduits (37).

11. Procédé selon l'une des revendications 9 et 10, **caractérisé en ce qu'**il comprend une étape de pré fermeture du moule préalablement à l'étape d'aspiration, au cours de laquelle le piston (16) emboutit le film (12), mais laisse subsister un jeu entre le film (12) et l'empreinte (17), et **en ce que** l'air est aspiré par des orifices d'aspiration (40) situés à la périphérie de la partie en creux (32) sur tout l'espace de jeu compris entre le film (12) et l'empreinte (17).
